# DEMANDE DE BREVET EUROPEEN

(11) **EP 4 668 029 A1**
(43) Date de publication de la demande: **24.12.2025**
(21) Numéro de dépôt: 24183189.0
(22) Date de dépôt: 19.06.2024
(51) Int. Cl.: G04B 3/04, A44C 5/00, A44C 27/00, B22F 7/06, C04B 35/584, G04B 19/04, G04B 19/12, G04B 19/28, G04B 31/06, G04B 37/00, G04B 37/22, G04B 39/00

(54) **COMPOSANT HORLOGER OU DE BIJOUTERIE EN CÉRAMIQUE**

(71) Demandeur: Comadur S.A., 2400 Le Locle (CH)
(72) Inventeur: VUILLE, Pierry, 2338 Les Emibois (CH); BOUCHET, Julen, 68480 Liebsdorf (FR)
(74) Mandataire: ICB SA

(57) **Abrégé**

L'invention concerne un composant horloger ou de bijouterie, caractérisé en ce qu'il comporte du nitrure de silicium en phase y dans un pourcentage en volume compris entre 99% et 100%.

## Description

### Domaine technique de l'invention

La présente invention se rapporte à un composant horloger ou de bijouterie réalisé dans une céramique transparente à haute dureté.

### Arrière-plan technologique

Actuellement, les différents composants horlogers sont réalisés dans les matériaux listés ci-après. Les lunettes de montre sont généralement réalisées dans des matériaux céramiques tels que l'oxyde de zirconium, dans des alliages d'aluminium ou dans de l'acier. Les glaces sont généralement en saphir et les pierres d'horlogerie généralement en rubis. Quant aux carrures, poussoirs et couronnes, ils sont généralement réalisés dans des alliages métalliques, par ex. dans de l'acier inoxydable ou du titane, ou dans des céramiques. Le nitrure de silicium est une de ces céramiques. Le nitrure de silicium utilisé dans les composants horlogers est en phase α qui est une phase trigonale ou en phase β qui est une phase hexagonale, tous deux affichant une dureté entre 1500 HV et 1600 HV.

De manière générale, les matériaux précités présentent des duretés pouvant aller jusqu'à 1600 HV pour les céramiques et jusqu'à 2000 HV pour le rubis. Il est difficile d'atteindre des duretés supérieures à ces valeurs, ce qui limite l'aptitude à réduire la rayabilité des composants horlogers externes comme les poussoirs ou les lunettes.

De nos jours, il existe toujours une demande pour des matériaux présentant une dureté supérieure à ces valeurs, une dureté supérieure se traduisant par une réduction de la rayabilité et également de l'usure et de la dégradation.

### Résumé de l'invention

La présente invention a pour objet de proposer un composant horloger ou de bijouterie réalisé dans un matériau ayant une dureté supérieure ou égale à 3000 HV afin d'augmenter sa résistance à l'usure, à la rayabilité et de manière plus générale à la dégradation.

A cet effet, il est proposé de réaliser un composant horloger ou de bijouterie dans un nitrure de silicium présentant une phase γ qui est une phase cubique, plutôt qu'une phase α ou β telle que présente dans les composants horlogers actuels. Le nitrure de silicium en phase γ a une dureté exceptionnelle pouvant atteindre 3500 HV. La dureté du composant est donc multipliée par 2,3 par rapport à une céramique conventionnelle. Pour une utilisation externe, les carrures, lunettes, couronnes ou encore poussoirs réalisés dans ce matériau présentent ainsi une résistance à la rayure unique. En outre, ce matériau présente pour caractéristique d'être transparent. La transparence de ce matériau le rend particulièrement attractif pour la réalisation de glaces à la résistance à la rayure exceptionnelle. Pour une utilisation interne, les pierres d'horlogerie pour ne citer qu'elles, réalisées dans ce matériau ont une dureté 1,75 fois supérieure à celle du rubis généralement utilisé pour cette application. En outre, les premières recherches tentent à montrer que l'utilisation du silicium du nitrure de silicium permet d'obtenir des mouvements sans lubrifiant. Il est probable que ce matériau ait de bonnes propriétés tribologiques ouvrant la voie à des mouvements sans maintenance. L'amélioration des propriétés tribologiques permettrait d'abaisser le coefficient de friction entre les composants en contact sec ou lubrifié et ainsi de réduire l'usure des composants internes.

Plus précisément, la présente invention se rapporte à un composant horloger ou de bijouterie, caractérisé en ce qu'il comporte du nitrure de silicium en phase γ dans un pourcentage en volume compris entre 99% et 100%.

Plus précisément, la présente invention se rapporte à un composant horloger ou de bijouterie, caractérisé en ce qu'il est constitué de nitrure de silicium en phase γ dans un pourcentage en volume compris entre 99% et 100% avec éventuellement dans un pourcentage en volume inférieur ou égal à 1% du nitrure de silicium en phase α et/ou β, et/ou des impuretés.

### Description détaillée de l'invention

La présente invention se rapporte à un composant horloger ou de bijouterie réalisé dans du nitrure de silicium (Si₃N₄) en phase γ. Dans le domaine horloger, il peut s'agir d'un composant d'habillage tel qu'une carrure, un fond, une lunette, un poussoir, une couronne, une soupape, un maillon de bracelet, un cadran, une aiguille, un index de cadran, etc. Il peut également s'agir d'un composant du mouvement tel qu'une pierre d'horlogerie.

Ce composant en nitrure de silicium phase γ a une dureté supérieure ou égale à 3000 HV pouvant aller jusqu'à 3500 HV.

Le composant est fabriqué à partir d'une poudre ou d'un mélange de poudres. A titre d'exemple, il peut s'agir de la poudre commerciale SN-E10, Ube Industries, Ltd., Ube, Japan. Le mélange de poudres peut être composé de 20% α-Si₃N₄ et 80% β-Si₃N₄ ou de 100% β-Si₃N₄. Le frittage se fait dans un équipement de type MAP, MultiAnvil Press, la presse peut être de type KAWAI. Cette presse permet d'appliquer des pressions extrêmes, jusqu'à 45 GPa via des assemblages d'enclumes appliquant la force sur de la poudre encapsulée. La capsule peut être composée de platine. Le frittage est réalisé à une température comprise entre 1600°C et 1900°C, de préférence entre 1650°C et 1850°C, pendant une durée à la température du palier allant de vingt minutes à soixante minutes sous une pression supérieure ou égale à 10 GPa, de préférence supérieure ou égale à 15 GPa. La pression atteignable sera d'autant plus importante que le composant sera de faibles dimensions, avec une facilité particulière pour la réalisation des poussoirs, des couronnes et des pierres d'horlogerie.

Préférentiellement, le composant obtenu est composé à 100% en volume de Si₃N₄ en phase γ. Il ne peut cependant être exclu qu'une fraction inférieure ou égale à 1% en volume de Si₃N₄ en phase α et/ou β soit présente, la présence des différentes phases étant quantifiée par diffraction de rayons X selon la norme NF EN 13925. Cette fraction inférieure ou égale à 1% pourrait également comprendre des impuretés types Na, Ca, P, Fe, Ni, Cl.

Le composant a une dureté comprise entre 3000 HV et 3500 HV mesurée selon la norme ISO 14705:2016. Il présente pour autre caractéristique d'être transparent.

## Revendications

1. Composant horloger ou de bijouterie, **caractérisé en ce qu'**il comporte du nitrure de silicium en phase γ dans un pourcentage en volume compris entre 99% et 100%.

2. Composant horloger ou de bijouterie selon la revendication 1, **caractérisé en ce qu'**il a une dureté HV comprise entre 3000 et 3500.

3. Composant horloger ou de bijouterie selon l'une des revendications précédentes, **caractérisé en ce qu'**il s'agit d'un composant d'habillage ou du mouvement.

4. Composant horloger ou de bijouterie selon la revendication précédente, **caractérisé en ce qu'**il s'agit d'un poussoir, d'une couronne ou d'une pierre d'horlogerie.

5. Composant horloger ou de bijouterie selon la revendication 3, **caractérisé en ce qu'**il s'agit d'une glace.
